# EUROPEAN PATENT APPLICATION

(11) **EP 4 439 729 A1**
(43) Date of publication of application: **02.10.2024**
(21) Application number: 23837929.1
(22) Date of filing: 29.11.2023
(51) Int. Cl.: H01M 4/583, C01B 32/205

(54) **CATALYTIC GRAPHITE MATERIAL, PREPARATION METHOD, AND USE THEREOF**

(30) Priority: 08.02.2023 CN 202310076767
(71) Applicant: Liyang Zichen New Materials Technology Co., Ltd, Changzhou, Jiangsu 213300 (CN)
(72) Inventor: JIANG, Zhao, Changzhou, Jiangsu 213300 (CN); LU, Yunfei, Changzhou, Jiangsu 213300 (CN); WANG, Biao, Changzhou, Jiangsu 213300 (CN); DING, Le, Changzhou, Jiangsu 213300 (CN); PANG, Wenwen, Changzhou, Jiangsu 213300 (CN); LIU, Dongren, Changzhou, Jiangsu 213300 (CN); LI, Hui, Changzhou, Jiangsu 213300 (CN)
(74) Representative: Zacco Sweden AB
(86) International application number: PCT/CN2023/134935
(87) International publication number: WO 2024/164649

(57) **Abstract**

Provided are a catalytic graphite material, a preparation method therefor and use thereof. The catalytic graphite material comprises flake graphite and hollow spherical graphite particles, and the catalytic graphite material has a 3R phase. The catalytic graphite material has a high purity and a high graphitization degree, and has the 3R phase. The existence of the 3R phase provides more intercalation sites for lithium ions, and the catalytic graphite material exhibits the advantages of high capacity, high initial efficiency and low expansion when applied to anode materials for lithium-ion batteries and thereby significantly improves lithium-ion batteries in the electrochemical performance such as capacity and initial efficiency.

## Description

### TECHNICAL FIELD

The present application belongs to the technical field of batteries, and relates to a catalytic graphite material, a preparation method therefor and use thereof.

### BACKGROUND

Anode material is the core material of lithium-ion batteries, and graphite anode material is the current mainstream anode material with the largest production and sales volume. At present, the preparation technology of high-performance anode materials and low-energy-consumption and low-cost preparation processes have put forward higher requirements. Biomass has remarkable characteristics such as wide material sources, ecological safety and no pollution. Converting biomass into graphite anode materials not only realizes carbon sequestration, but also reduces the dependence on fossil fuels such as coal and petroleum. The preparation of graphite anode materials for energy storage from biomass has significant economic, ecological and social benefits.

For example, the patent application with Publication No. CN 107406259A discloses a method of producing graphite from biomass. In this method, biomass and a transition metal salt catalyst are subjected to a hydrothermal reaction in a high-temperature and high-pressure reactor, and the catalyst is dispersed to obtain hydrothermal carbon loaded with the catalyst; then the hydrothermal carbon is filtrated, dried, and then graphitized by an electromagnetic radiation generator; finally, the product is obtained by impurity removal with acid washing, water washing and drying. However, the high-temperature and high-pressure process required in preparing the hydrothermal carbon and the special graphitization device limit the large-scale and low-cost production of the product.

The patent application with Publication No. CN 102502598A discloses a catalytic graphitization method for wood powder. This method employs nano metal or metal oxide as a catalyst; the catalyst and wood powder are mixed uniformly, and subjected to heat treatment at 900-1600°C to obtain the catalytic graphite material. In the disclosed method, the wood powder is not pre-treated, which results in the limited space utilization of the heat treatment and graphitization equipment, the low production efficiency, and the high comprehensive energy consumption. Moreover, because the synthesized catalytic graphite contains a large amount of the catalyst not removed, the catalytic graphite material contains lots of magnetic substances and in turn cannot be used in lithium-ion batteries.

The patent application with Publication No. CN 109301225A discloses a graphite anode material with graphitization degree and pore size dual-gradient structure and preparation and use thereof. In this method, first, a porous carbon material with anthracite, biochar, petroleum coke, and asphaltene carbon as a carbon source and a specific surface area of 100-2000 m²/g needs to be obtained; the porous carbon material is immersed in a catalyst solution containing a water-insoluble or water-soluble metal salt, nano metal, and water-soluble non-metallic salt, the sealed vessel is subjected to vacuum impregnation and after drying, the catalyst is loaded in the pores of the porous carbon material, and then a two-stage electrical calcination is performed; in this process, an amorphous carbon source of asphalt and resin is added as the main component, and the radial gradient structure is ultimately formed. The disclosed method involves activation and pore making to obtain the porous carbon material and causes the loss of a large amount of carbon elements, which not only increases the preparation cost, but also reduces the yield of the final graphite product.

As can be seen, the catalytic graphite materials disclosed in the prior art need to be improved in performance to be applied to lithium-ion batteries; besides, the purity is not high, and for example, the silicon impurities contained in biomass or coal-based raw materials, which often exist in the form of silica and silicate, still remain after the catalytic reaction, and if they are not removed, their mass proportion will affect the overall gram capacity of the catalytic graphite, and in turn reduce the capacity of lithium-ion batteries. Moreover, the prior art mainly focuses on the conversion rate and graphitization degree of the catalytic graphite, but does not pay emphasis on or neglects the graphite structure required for the high performance of lithium-ion battery anode materials, and therefore, the key process of catalytic synthesis has not been optimized based on graphite structure characteristics required for the application of lithium-ion battery anode materials having low expansion, high capacity and high initial Coulombic efficiency. Meanwhile, in the preparation process of catalytic graphite, it is necessary to activate the carbon material into a porous material before loading with the catalyst for the convenience of impregnating the catalyst solution. Because the activation process causes a large amount of carbon loss, which not only adds the cost of the activation process but also reduces the yield of the final graphite product, the production cost is increased. Additionally, the treatment of biomass in the existing technology involves a high-temperature high-pressure hydrothermal reaction, and the catalytic conversion employs the electromagnetic radiation generator for heating, which limits the large-scale and low-cost production.

Based on the above researches, there is a need to provide a catalytic graphite material, which exhibits the advantages of high capacity, high initial efficiency and low expansion when applied to anode materials for lithium-ion batteries.

### SUMMARY

The following is a summary of the subject matter described in detail herein. This summary is not intended to limit the protection scope of the claims.

An object of the present application is to provide a catalytic graphite material, a preparation method therefor and use thereof. The catalytic graphite material has high purity and high graphitization degree, and has a 3R phase. The catalytic graphite material exhibits the characteristics of high capacity, high initial efficiency and low expansion when applied to anode materials for lithium-ion batteries, thereby significantly enhancing the electrochemical performance of the lithium-ion batteries such as capacity and initial efficiency.

To achieve the object, the present application adopts the technical solutions below.

In a first aspect, the present application provides a catalytic graphite material, wherein the catalytic graphite material comprises flake graphite and hollow spherical graphite particles, and the catalytic graphite material has a 3R phase.

The catalytic graphite material of the present application has the 3R phase (rhombohedral phase). As a 3R structure of graphite is closely related to the high-capacity electrochemical property of the graphite anode material, and the existence of the 3R phase provides more intercalation sites for lithium ions, the catalytic graphite material can bring superior electrochemical properties than artificial graphite and natural graphite when used. Meanwhile, the present application comprises both flake graphite and hollow spherical graphite, wherein the flake graphite has a pore structure constructed by its different orientations and its folding and bending behaviors, which, combined with the hollow graphite particles, gives the graphite material more space to expand. Additionally, the catalytic graphite material has a small specific surface area and a small orientation index, which enables the product to obtain higher initial Coulombic efficiency and lower expansion compared to the catalytic graphite in the prior art. In an embodiment, the catalytic graphite material further comprises particle aggregates and irregular particles.

The catalytic graphite material of the present application comprises flake graphite, hollow spherical graphite, particle aggregates and irregular particles, and the various morphologies of the graphite material reduces the degree of anisotropy of the catalytic graphite material, and thus the catalytic graphite material exhibits the advantage of low expansion when applied to anode materials for lithium-ion batteries.

In an embodiment, the catalytic graphite material has a graphitization degree indicated as g, wherein 95% ≤ g < 100%, which may be, for example, 95%, 96%, 97%, 98%, 99% or 99.9%, but is not limited to the listed values, and other unlisted values within the numerical range are also applicable.

In an embodiment, the hollow spherical graphite particles have a sphericity of more than 0.7, which may be, for example, 0.75, 0.8, 0.85 or 0.9, but is not limited to the listed values, and other unlisted values within the numerical range are also applicable.

The sphericity in the present application refers to a ratio of the shortest axis to the longest axis of the particle.

In an embodiment, the hollow spherical graphite particles have an outer diameter indicated as D, wherein 5 < D < 50 µm, which may be, for example, 6 µm, 10 µm, 20 µm, 30 µm, 40 µm or 49 µm, but is not limited to the listed values, and other unlisted values within the numerical range are also applicable; optionally, 10 < D < 30 µm.

In an embodiment, the catalytic graphite material has an R value of 0.03-0.4, which may be, for example, 0.03, 0.05, 0.1, 0.2, 0.3, 0.4 or 0.5, but is not limited to the listed values, and other unlisted values within the numerical range are also applicable, wherein the R value = I_{D}/I_{G}, where I_{D} is the peak intensity of the D peak, and I_{G} is the peak intensity of the G peak; the Raman peak of the D peak is at approximately 1350 cm⁻¹ and the Raman peak of the G peak is at approximately 1580 cm⁻¹.

In an embodiment, the R value has an average value of less than 0.25, which may be, for example, 0.24, 0.2, 0.18, 0.16, 0.14 or 0.12, but is not limited to the listed values, and other unlisted values within the numerical range are also applicable.

In a second aspect, the present application provides a preparation method for the catalytic graphite material as described in the first aspect, and the preparation method comprises the following steps:
(1) pre-carbonizing a carbon source to obtain a carbon powder, mixing the carbon powder with a catalyst solution, and performing solid-liquid separation to obtain composite particles loaded with a catalyst; and
(2) subjecting the composite particles in step (1) to heat treatment and performing post-treatment to obtain the catalytic graphite material.

In the present application, firstly, the carbon source is pre-carbonized, such that the inherent pores or the voids formed among macromolecule can be retained during the pre-carbonization, and moreover, small molecule will overflow to form tiny micro-channels during the pre-carbonization process; subsequently, the carbon powder obtained from the pre-carbonization is mixed with the catalyst solution, such that the catalyst solution fills the voids of the carbon powder, so as to obtain the composite particles which are uniformly loaded with a catalyst on the surface and in the pores; finally, the composite particles are subjected to the high-temperature heat treatment and then post-treatment to remove the catalyst, so as to obtain the catalytic graphite material with a purity of more than or equal to 99.9%. The obtained catalytic graphite material exhibits high capacity, high initial efficiency and low expansion when applied to anode materials for lithium-ion batteries.

In an embodiment, the mixing of the carbon powder with the catalyst solution in step (1) comprises subjecting the carbon powder to vacuum impregnation with the catalyst solution.

The carbon powder in the present application is optionally impregnated in the catalyst solution under vacuum conditions, which enables the catalyst solution to fully fill in the voids of the carbon powder and thereby facilitates the conversion from carbon material to catalytic graphite with high efficiency and high quality.

In an embodiment, the vacuum impregnation is performed for a period of 1-2.5 h, which may be, for example, 1 h, 1.5 h, 2 h or 2.5 h, but is not limited to the listed values, and other unlisted values within the numerical range are also applicable.

In an embodiment, a mass ratio of the carbon powder to the catalyst solution in step (1) is 1: (4-7), which may be, for example, 1: 4, 1: 5, 1: 6 or 1: 7, but is not limited to the listed values, and other unlisted values within the numerical range are also applicable.

With a suitable amount in the present application, the catalyst can further enhance the electrochemical performance of the catalytic graphite material. The overly large amount of the catalyst will increase the difficulty of acid washing and purification, increase the production cost, and easily lead to an overlarge specific surface area of the catalytic graphite, and accordingly, the catalytic graphite material will have poor initial Coulombic efficiency, while the overly small amount of the catalyst will lead to poor catalytic conversion and low catalytic conversion rate, and thereby the catalytic graphite material will have poor capacity and also poor initial Coulombic efficiency.

In an embodiment, a mass of a material A obtained from the solid-liquid separation in step (1) is 3-3.7 times a mass of the carbon powder, which may be, for example, 3 times, 3.2 times, 3.4 times, 3.6 times or 3.7 times, but is not limited to the listed values, and other unlisted values within the numerical range are also applicable.

In an embodiment, the catalyst solution in step (1) comprises a catalyst and water in a mass ratio of (1-2): 1, which may be, for example, 1: 1, 1.5: 1 or 2: 1, but is not limited to the listed values, and other unlisted values within the numerical range are also applicable.

In an embodiment, the pre-carbonizing in step (1) is performed at a temperature of 500-1200°C, which may be, for example, 500°C, 600°C, 700°C, 800°C, 900°C, 1000°C, 1100°C or 1200°C, and for a period of 1-6 h, which may be, for example, 1 h, 2 h, 3 h, 4 h, 5 h, or 6 h, but is not limited to the listed values, and other unlisted values within the numerical range are also applicable.

In an embodiment, the pre-carbonizing in step (1) is performed under a protective gas, and the protective gas comprises any one or a combination of at least two of nitrogen, argon, krypton or helium.

In an embodiment, the carbon powder in step (1) has a particle size D50 of 5-45 µm, which may be, for example, 5 µm, 10 µm, 20 µm, 30 µm, 40 µm or 45 µm, but is not limited to the listed values, and other unlisted values within the numerical range are also applicable.

In an embodiment, the solid-liquid separation in step (1) comprises pressure filtration.

In an embodiment, the solid-liquid separation in step (1) is further followed by drying, and the drying is performed at a temperature of 150-300°C, which may be, for example, 150°C, 200°C, 250°C or 300°C, and for a period of 2-4 h, which may be, for example, 2 h, 3 h or 4 h, but is not limited to the listed values, and other unlisted values within the numerical range are also applicable.

In an embodiment, the catalyst in step (1) comprises an inorganic salt and/or an organic salt, and preferably is any one or a combination of at least two of inorganic salts and/or organic salts of vanadium, chromium, manganese, iron, cobalt, nickel or copper, and typical but non-limiting combinations comprise a combination of vanadium and chromium, or a combination of manganese and iron.

In an embodiment, the carbon source in step (1) comprises a biomass carbon source and/or a biomass-derived material.

The carbon source of the present application is a carbon-containing biomass feedstock having pores, and a biomass-derived material capable of forming voids.

In an embodiment, the biomass carbon source comprises any one or a combination of at least two of straw, shell, wood or bamboo, and typical but non-limiting combinations comprise a combination of straw and shell, or a combination of wood and bamboo.

In an embodiment, the biomass-derived material comprises any one or a combination of at least two of glucose, sucrose, starch, lignin, cellulose or hemicellulose, and typical but non-limiting combinations comprise a combination of glucose and sucrose, or a combination of starch and lignin.

In an embodiment, the composite particles are further subjected to isostatic pressing treatment before the heat treatment in step (2).

In the present application, the isostatic pressing treatment is performed before the heat treatment, whereby the residual voids are further reduced and the contact between the catalyst and the carbon is improved, thus facilitating the catalytic conversion from carbon to graphite material, and also facilitating coating part of the catalyst with the carbon powder and in turn forming graphite hollow spheres by removing the catalyst.

In an embodiment, the isostatic pressing treatment has a pressurization rate of 5-100 MPa/min, which may be, for example, 5 MPa/min, 10 MPa/min, 20 MPa/min, 40 MPa/min, 60 MPa/min, 80 MPa/min or 100 MPa/min, and a pressure of 200-400 MPa, which may be, for example, 200 MPa, 300 MPa or 400 MPa, but is not limited to the listed values, and other unlisted values within the numerical range are also applicable.

In an embodiment, the isostatic pressing treatment has a pressure holding period of 10-120 min, which may be, for example, 10 min, 30 min, 50 min, 70 min, 90 min, 110 min or 120 min, and a depressurization rate of 5-100 MPa/min, which may be, for example, 5 MPa/min, 10 MPa/min, 20 MPa/min, 40 MPa/min, 60 MPa/min, 80 MPa/min or 100 MPa/min, and the pressure is 200-400 Mpa, but is not limited to the listed values, and other unlisted values within the numerical range are also applicable.

In an embodiment, the isostatic pressing treatment is performed for at least two times, which may be, for example, two times, three times, four times or five times, but is not limited to the listed values, and other unlisted integers within the numerical range are also applicable.

The isostatic pressing treatment in the present application is performed under a particular pressure range. A greater peak value of the pressure of the isostatic pressing treatment is more conducive to the catalytic conversion from carbon to graphite; meanwhile, the pressure forces the carbon powder to tightly coat on part of the catalyst, the carbon coated on the catalyst surface is converted into graphite in the catalytic conversion process, and graphite hollow spheres can be obtained after removing the catalyst. However, when the pressure is too high, exceeding the pressure-resisting capability of the carbon powder or the catalyst, the pressed material will crack, stretch and pulverize, which is detrimental to the catalytic effect. Furthermore, within a suitable pressure range, the slow pressurization, prolonged pressure holding period, slow depressurization, and multiple cycles of isostatic pressing are advantageous for the subsequent catalytic conversion from carbon to graphite.

In an embodiment, the heat treatment in step (2) is performed at a temperature of 1300-1900°C, which may be, for example, 1300°C, 1500°C, 1700°C or 1900°C, and for a period of 1-5 h, which may be, for example, 1 h, 2 h, 3 h, 4 h or 5 h, but is not limited to the listed values, and other unlisted values within the numerical range are also applicable.

In an embodiment, the post-treatment in step (2) comprises acid washing, water washing and drying in sequence.

In an embodiment, an acid-washing solution employed in the acid washing comprises hydrochloric acid and/or hydrofluoric acid.

In an embodiment, the hydrochloric acid has a concentration of 0.8-1.2 mol/L, which may be, for example, 0.8 mol/L, 0.9 mol/L, 1.0 mol/L, 1.1 mol/L or 1.2 mol/L, and the hydrofluoric acid has a concentration of 0.3-0.7 mol/L, which may be, for example, 0.3 mol/L, 0.5 mol/L or 0.7 mol/L, but is not limited to the listed values, and other unlisted values within the numerical range are also applicable.

In an embodiment, the drying is performed at a temperature of 150-300°C, which may be, for example, 150°C, 200°C, 250°C or 300°C, and for a period of 0.5-3 h, which may be, for example, 0.5 h, 1 h, 2 h or 3 h, but is not limited to the listed values, and other unlisted values within the numerical range are also applicable.

As an optional technical solution of the preparation method in the present application, the preparation method comprises the following steps:
(1) pre-carbonizing a carbon source at a temperature of 500-1200°C for 1-6 h under a protective gas to obtain a carbon powder with a particle size D50 of 5-45 µm, subjecting the carbon powder to vacuum impregnation with a catalyst solution for 1-2.5 h, then performing pressure filtration, and drying a filter cake obtained from the pressure filtration at 150-300°C for 2-4 h, so as to obtain composite particles loaded with a catalyst; and
   a mass ratio of the carbon powder to the catalyst solution is 1: (4-7); and
(2) pressurizing the composite particles in step (1) to 200-400 MPa at a pressurization rate of 5-100 MPa/min, performing isostatic pressing treatment for 10-120 min, then depressurizing at a depressurization rate of 5-100 MPa/min to obtain an isostatic-pressing material, and subjecting the isostatic-pressing material to heat treatment at a temperature of 1300-1900°C for 1-5 h, then performing acid washing, water washing and drying in sequence, so as to obtain the catalytic graphite material.

In a third aspect, the present application provides a lithium-ion battery, and the lithium-ion battery comprises the catalytic graphite material as described in the first aspect.

Compared to the prior art, the present application has the following beneficial effects:
the catalytic graphite material in the present application has a 3R phase, and employs both flake graphite and hollow spherical graphite; based on the combination of flake graphite and hollow graphite, the catalytic graphite material exhibits more excellent electrochemical performance than artificial graphite, natural graphite and conventional catalytic graphite material, and accordingly, the catalytic graphite material in the present application exhibits the advantages of high capacity, high initial efficiency and low expansion when applied to anode materials for lithium-ion batteries; meanwhile, in the present application, the preparation method is improved to tightly combining the catalyst and carbon powder together, so as to obtain biomass graphite of higher quality, realizing real carbon recycling and carbon sequestration effect in the field of new energy.

Other aspects can be understood upon reading and appreciating the drawings and detailed description.

### BRIEF DESCRIPTION OF DRAWINGS

The drawings are used to provide a further understanding of the technical solutions herein and form part of the specification. The drawings are used in conjunction with the examples of the present application to explain the technical solutions herein and do not constitute a limitation to the technical solutions herein.
FIG. 1 shows an SEM image of the carbon powder in Example 1 of the present application;
FIG. 2 shows an SEM image of the composite particles in Example 1 of the present application;
FIG. 3 shows an SEM image of the cross section of composite particles in Example 1 of the present application;
FIG. 4 shows a mapping image of C in the composite particles in Example 1 of the present application;
FIG. 5 shows a mapping image of Ni in the composite particles in Example 1 of the present application;
FIG. 6 shows an XRD pattern of the catalytic graphite material in a 2θ range of 20-80° in Example 1 of the present application;
FIG. 7 shows an XRD pattern of the catalytic graphite material in a 2θ range of 40-48° in Example 1 of the present application;
FIG. 8 shows an XRD pattern of the catalytic graphite material in a 2θ range of 52-80° in Example 1 of the present application;
FIG. 9 shows a Raman 2D image and corresponding optical picture of the catalytic graphite material in Example 1 of the present application obtained from plane-scanning by a laser Raman spectroscopy;
FIG. 10 shows an SEM image of flake graphite in the catalytic graphite material in Example 1 of the present application;
FIG. 11 shows an SEM image of hollow spherical graphite particles in the catalytic graphite material in Example 1 of the present application;
FIG. 12 shows an SEM image of particle aggregates in the catalytic graphite material in Example 1 of the present application;
FIG. 13 shows an SEM image of irregular particles in the catalytic graphite material in Example 1 of the present application;
FIG. 14 shows an SEM image of ruptured hollow spherical graphite particles in the catalytic graphite material in Example 1 of the present application;
FIG. 15 shows the cross sectional morphology of the catalytic graphite material in Example 1 of the present application;
FIG. 16 shows charge-discharge curves of a cell prepared with the catalytic graphite material in Example 1 of the present application;
FIG. 17 shows charge-discharge curves of a cell prepared with the catalytic graphite material in Example 5 of the present application;
FIG. 18 shows charge-discharge curves of a cell prepared with the catalytic graphite material in Example 7 of the present application;
FIG. 19 shows an SEM image of the cross section of the artificial graphite material in Comparative Example 2 of the present application;
FIG. 20 shows an XRD pattern of the artificial graphite material in a 2θ range of 20-80° in Comparative Example 2 of the present application;
FIG. 21 shows an XRD pattern of the artificial graphite material in a 2θ range of 40-48° in Comparative Example 2 of the present application;
FIG. 22 shows an XRD pattern of the artificial graphite material in a 2θ range of 52-80° in Comparative Example 2 of the present application;
FIG. 23 shows an SEM image of the flake graphite material at a scale of 500 µm in Comparative Example 3 of the present application;
FIG. 24 shows an SEM image of the flake graphite material at a scale of 20 µm in Comparative Example 3 of the present application;
FIG. 25 shows an XRD pattern of the flake graphite material in a 2θ range of 20-80° in Comparative Example 3 of the present application;
FIG. 26 shows an XRD pattern of the flake graphite material in a 2θ range of 40-48° in Comparative Example 3 of the present application;
FIG. 27 shows an XRD pattern of the flake graphite material in a 2θ range of 52-80° in Comparative Example 3 of the present application;
FIG. 28 shows XRD patterns of the catalytic graphite material in Example 1 of the present application and the flake graphite material in Comparative Example 3 in a 2θ range of 12-32°;
FIG. 29 shows an SEM image of the spheroidized natural graphite material in Comparative Example 4 of the present application;
FIG. 30 shows an SEM image of the cross section of the spheroidized natural graphite material in Comparative Example 4 of the present application;
FIG. 31 shows a Raman 2D image and corresponding optical picture of the spheroidized natural graphite material in Comparative Example 4 of the present application obtained from plane-scanning by a laser Raman spectroscopy.

### DETAILED DESCRIPTION

The technical solutions of the present application are further described below in terms of specific examples. It should be clear to those skilled in the art that the examples are merely used for a better understanding of the present application and should not be regarded as a specific limitation to the present application.

### Example 1

This example provides a catalytic graphite material with a 3R phase, comprising flake graphite, hollow spherical graphite particles, particle aggregates and irregular particles.

A preparation method for the catalytic graphite material comprises the following steps:
(1) corn straw was pre-carbonized at 900°C for 1 h under nitrogen protection and then crushed to obtain a carbon powder with a particle size D50 of 45 µm; subsequently, the carbon powder was subjected to vacuum impregnation with a catalyst solution for 1 h and then to pressure filtration to obtain a material A containing the catalyst solution, and it was shown by the weighing result that a mass of the material A was 3.7 times a mass of the carbon powder, i.e., a mass ratio of the carbon powder to the catalyst solution was 1: 2.7; subsequently, the material A was dried at 300°C for 2 h to obtain composite particles loaded with a catalyst;
   a mass ratio of the carbon powder to the catalyst solution was 1: 5; and the catalyst solution included nickel chloride and water in a mass ratio of 1.8: 1; and
(2) the composite particles in step (1) were pressurized to 350 MPa at a pressurization rate of 5 MPa/min, and performed isostatic pressing treatment for 120 min, and then the pressure was released at a depressurization rate of 5 MPa/min to obtain an isostatic-pressing material; the isostatic-pressing material was subjected to heat treatment at 1900°C for 1 h and then to acid washing with a mixture of 1 mol/L hydrochloric acid and 0.5 mol/L hydrofluoric acid, filtration, water washing, and finally drying at 200°C for 2 h, so as to obtain the catalytic graphite material.

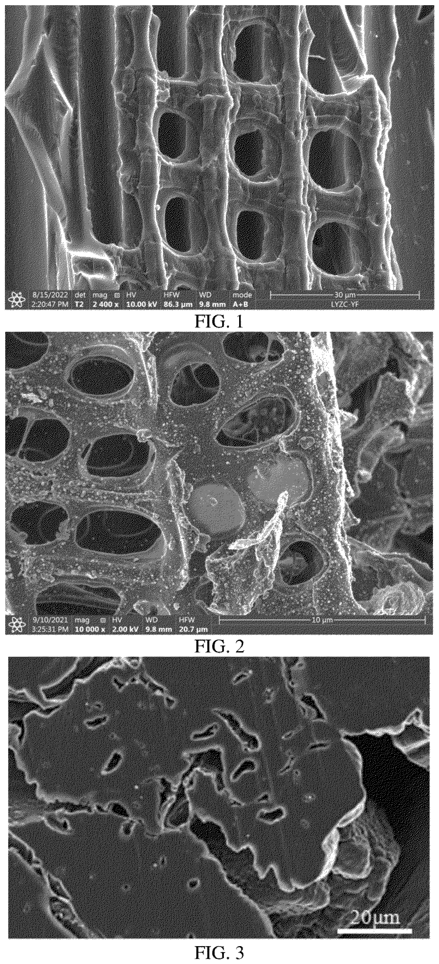

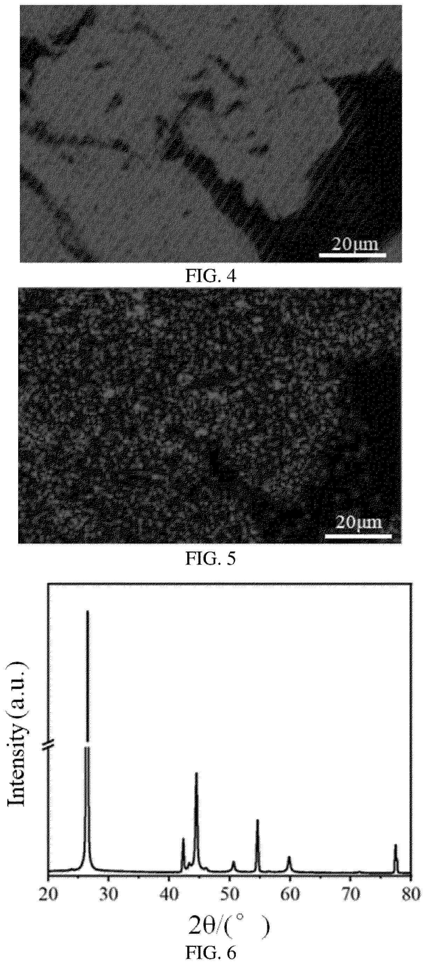

An SEM image of the carbon powder in this example is shown in FIG. 1, an SEM image of the composite particles is shown in FIG. 2, an SEM image of the cross section of the composite particles is shown in FIG. 3, a mapping image of C in the composite particles is shown in FIG. 4, and a mapping image of Ni is shown in FIG. 5.

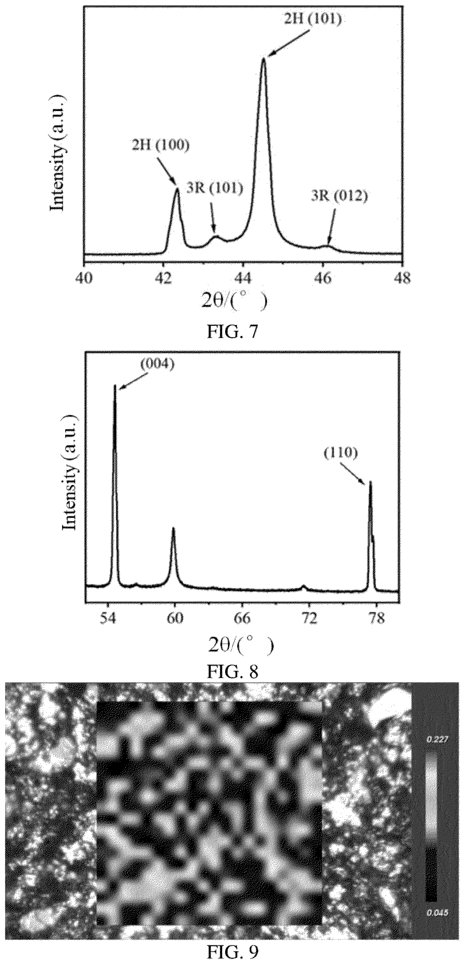

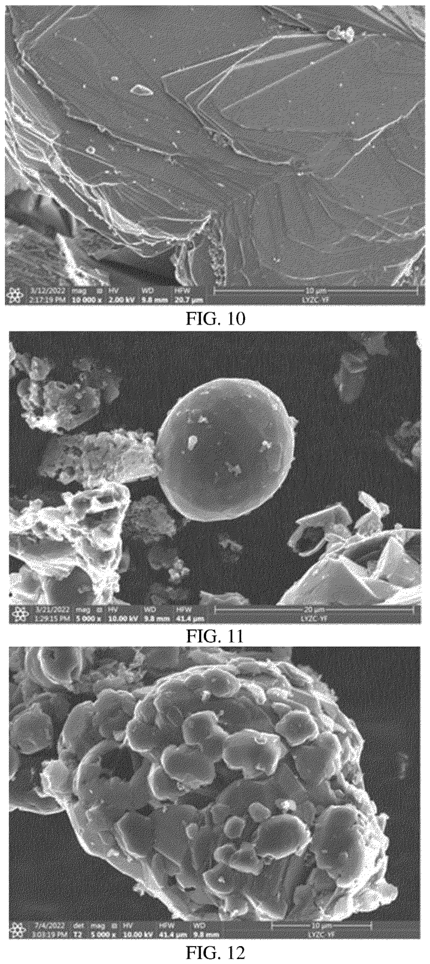

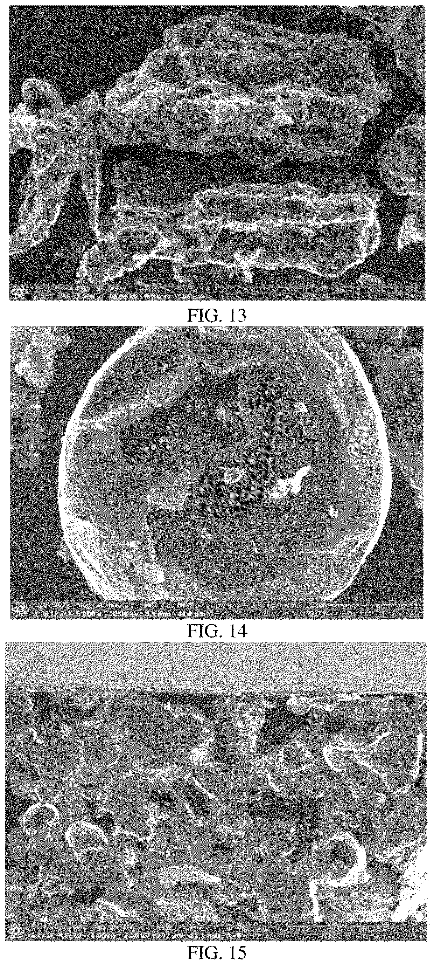

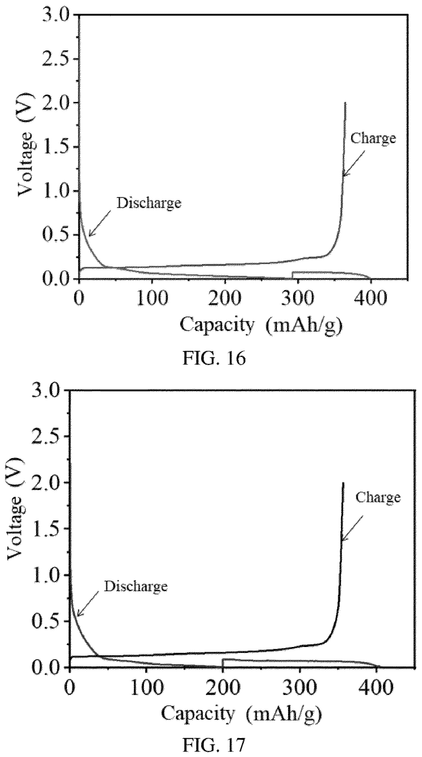

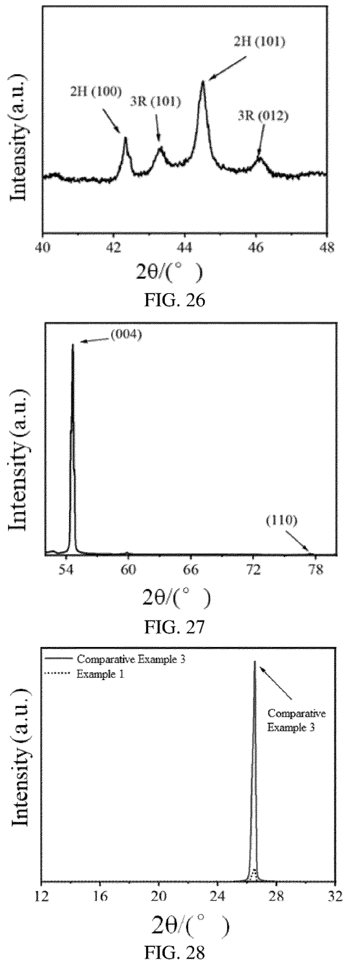

An XRD pattern of the catalytic graphite material in a 2θ range of 20-80° is shown in FIG. 6, an XRD pattern in a 2θ range of 40-48° is shown in FIG. 7, an XRD pattern in a 2θ range of 52-80° is shown in FIG. 8, a Raman 2D image and corresponding optical picture obtained from plane-scanning by a laser Raman spectroscopy are shown in FIG. 9, an SEM image of flake graphite in the catalytic graphite material is shown in FIG. 10, an SEM image of hollow spherical graphite particles is shown in FIG. 11, an SEM image of particle aggregates is shown in FIG. 12, an SEM image of irregular particles is shown in FIG. 13, and an SEM image of ruptured hollow spherical graphite particles is shown in FIG. 14; the cross sectional morphology of the catalytic graphite material is shown in FIG. 15, charge-discharge curves of a cell prepared with the catalytic graphite material are shown in FIG. 16, and an XRD pattern a 2θ range of 12-32° is shown in FIG. 28.

### Example 2

This example provides a catalytic graphite material with a 3R phase, comprising flake graphite, hollow spherical graphite particles, particle aggregates and irregular particles.

A preparation method for the catalytic graphite material comprises the following steps:
(1) soybean straw was pre-carbonized at 1200°C for 2 h under nitrogen protection and then crushed to obtain a carbon powder with a particle size D50 of 37 µm; subsequently, the carbon powder was subjected to vacuum impregnation with a catalyst solution for 1.5 h and then to pressure filtration to obtain a material A containing the catalyst solution, and it was shown by the weighing result that a mass of the material A was 3.3 times a mass of the carbon powder, i.e., a mass ratio of the carbon powder to the catalyst solution was 1: 2.3; subsequently, the material A was dried at 250°C for 2.5 h to obtain composite particles loaded with a catalyst;
   a mass ratio of the carbon powder to the catalyst solution was 1: 5; and the catalyst solution included cobalt chloride and water in a mass ratio of 1: 1; and
(2) the composite particles in step (1) were pressurized to 400 MPa at a pressurization rate of 50 MPa/min, and performed isostatic pressing treatment for 120 min, and then the pressure was released at a depressurization rate of 50 MPa/min to obtain an isostatic-pressing material; the isostatic-pressing material was subjected to heat treatment at 1700°C for 3 h and then to acid washing with a mixture of 0.8 mol/L hydrochloric acid and 0.7 mol/L hydrofluoric acid, filtration, water washing, and finally drying at 250°C for 1 h, so as to obtain the catalytic graphite material.

### Example 3

This example provides a catalytic graphite material with a 3R phase, comprising flake graphite, hollow spherical graphite particles, particle aggregates and irregular particles.

A preparation method for the catalytic graphite material comprises the following steps:
(1) coconut shell was pre-carbonized at 800°C for 2 h under nitrogen protection and then crushed to obtain a carbon powder with a particle size D50 of 25 µm; subsequently, the carbon powder was subjected to vacuum impregnation with a catalyst solution for 2 h and then to pressure filtration to obtain a material A containing the catalyst solution, and it was shown by the weighing result that a mass of the material A was 3 times a mass of the carbon powder, i.e., a mass ratio of the carbon powder to the catalyst solution was 1: 2.0; subsequently, the material A was dried at 150°C for 4 h to obtain composite particles loaded with a catalyst;
   a mass ratio of the carbon powder to the catalyst solution was 1: 6; and the catalyst solution included ferric chloride and water in a mass ratio of 1: 1; and
(2) the composite particles in step (1) were pressurized to 200 MPa at a pressurization rate of 10 MPa/min, and performed isostatic pressing treatment for 60 min, and then the pressure was released at a depressurization rate of 5 MPa/min to obtain an isostatic-pressing material; the isostatic-pressing material was subjected to heat treatment at 1300°C for 4 h and then to acid washing with a mixture of 1 mol/L hydrochloric acid and 0.5 mol/L hydrofluoric acid, filtration, water washing, and finally drying at 300°C for 0.5 h, so as to obtain the catalytic graphite material.

### Example 4

This example provides a catalytic graphite material with a 3R phase, comprising flake graphite, hollow spherical graphite particles, particle aggregates and irregular particles.

A preparation method for the catalytic graphite material comprises the following steps:
(1) beech was pre-carbonized at 600°C for 3 h under argon protection and then crushed to obtain a carbon powder with a particle size D50 of 20 µm; subsequently, the carbon powder was subjected to vacuum impregnation with a catalyst solution for 2 h and then to pressure filtration to obtain a material A containing the catalyst solution, and it was shown by the weighing result that a mass of the material A was 3.2 times a mass of the carbon powder, i.e., a mass ratio of the carbon powder to the catalyst solution was 1: 2.2; subsequently, the material A was dried at 150°C for 4 h to obtain composite particles loaded with a catalyst;
   a mass ratio of the carbon powder to the catalyst solution was 1: 4; and the catalyst solution included ferric nitrate and water in a mass ratio of 1.5: 1; and
(2) the composite particles in step (1) were pressurized to 250 MPa at a pressurization rate of 50 MPa/min, and performed isostatic pressing treatment for 10 min, and then the pressure was released at a depressurization rate of 50 MPa/min to obtain an isostatic-pressing material; the isostatic-pressing material was subjected to heat treatment at 1500°C for 3 h and then to acid washing with a mixture of 1.2 mol/L hydrochloric acid and 0.3 mol/L hydrofluoric acid, filtration, water washing, and finally drying at 150°C for 3 h, so as to obtain the catalytic graphite material.

### Example 5

This example provides a catalytic graphite material with a 3R phase, comprising flake graphite, hollow spherical graphite particles, particle aggregates and irregular particles.

A preparation method for the catalytic graphite material comprises the following steps:
(1) poplar was pre-carbonized at 700°C for 3 h under nitrogen protection and then crushed to obtain a carbon powder with a particle size D50 of 9 µm; subsequently, the carbon powder was subjected to vacuum impregnation with a catalyst solution for 2.5 h and then to pressure filtration to obtain a material A containing the catalyst solution, and it was shown by the weighing result that a mass of the material A was 3.4 times a mass of the carbon powder, i.e., a mass ratio of the carbon powder to the catalyst solution was 1: 2.4; subsequently, the material A was dried at 150°C for 4 h to obtain composite particles loaded with a catalyst;
   a mass ratio of the carbon powder to the catalyst solution was 1: 7; and the catalyst solution included cobalt sulfate and water in a mass ratio of 1: 1; and
(2) the composite particles in step (1) were pressurized to 250 MPa at a pressurization rate of 20 MPa/min, and performed isostatic pressing treatment for 30 min, and then the pressure was released at a depressurization rate of 20 MPa/min to obtain an isostatic-pressing material; the isostatic-pressing material was subjected to heat treatment at 1300°C for 4 h and then to acid washing with a mixture of 1 mol/L hydrochloric acid and 0.5 mol/L hydrofluoric acid, filtration, water washing, and finally drying at 150°C for 3 h, so as to obtain the catalytic graphite material.

Charge-discharge curves of a cell prepared with the catalytic graphite material in this example are shown in FIG. 17.

### Example 6

This example provides a catalytic graphite material with a 3R phase, comprising flake graphite, hollow spherical graphite particles, particle aggregates and irregular particles.

A preparation method for the catalytic graphite material comprises the following steps:
(1) bamboo was pre-carbonized at 700°C for 4 h under nitrogen protection and then crushed to obtain a carbon powder with a particle size D50 of 43 µm; subsequently, the carbon powder was subjected to vacuum impregnation with a catalyst solution for 1 h and then to pressure filtration to obtain a material A containing the catalyst solution, and it was shown by the weighing result that a mass of the material A was 3.1 times a mass of the carbon powder, i.e., a mass ratio of the carbon powder to the catalyst solution was 1: 2.1; subsequently, the material A was dried at 200°C for 3 h to obtain composite particles loaded with a catalyst;
   a mass ratio of the carbon powder to the catalyst solution was 1: 5; and the catalyst solution included cobalt chloride, nickel chloride and water in a mass ratio of 1: 1: 1; and
(2) the composite particles in step (1) were pressurized to 400 MPa at a pressurization rate of 100 MPa/min, and performed isostatic pressing treatment for 60 min, and then the pressure was released at a depressurization rate of 100 MPa/min to obtain an isostatic-pressing material; the isostatic-pressing material was subjected to heat treatment at 1700°C for 5 h and then to acid washing with a mixture of 1 mol/L hydrochloric acid and 0.5 mol/L hydrofluoric acid, filtration, water washing, and finally drying at 150°C for 3 h, so as to obtain the catalytic graphite material.

### Example 7

This example provides a catalytic graphite material with a 3R phase, comprising flake graphite, hollow spherical graphite particles, particle aggregates and irregular particles.

A preparation method for the catalytic graphite material comprises the following steps:
(1) lignin was pre-carbonized at 500°C for 6 h under argon protection and then crushed to obtain a carbon powder with a particle size D50 of 5 µm; subsequently, the carbon powder was subjected to vacuum impregnation with a catalyst solution for 2 h and then to pressure filtration to obtain a material A containing the catalyst solution, and it was shown by the weighing result that a mass of the material A was 3.4 times a mass of the carbon powder, i.e., a mass ratio of the carbon powder to the catalyst solution was 1: 2.4; subsequently, the material A was dried at 200°C for 4 h to obtain composite particles loaded with a catalyst;
   a mass ratio of the carbon powder to the catalyst solution was 1: 5; and the catalyst solution included cobalt chloride, nickel chloride, ferric chloride and water in a mass ratio of 0.6: 0.6: 0.6: 1; and
(2) the composite particles in step (1) were pressurized to 350 MPa at a pressurization rate of 5 MPa/min, and performed isostatic pressing treatment for 120 min, and then the pressure was released at a depressurization rate of 5 MPa/min, and the above process of isostatic pressing treatment was performed again to obtain an isostatic-pressing material; the isostatic-pressing material was subjected to heat treatment at 1900°C for 2 h and then to acid washing with a mixture of 1 mol/L hydrochloric acid and 0.5 mol/L hydrofluoric acid, filtration, water washing, and finally drying at 150°C for 3 h, so as to obtain the catalytic graphite material.

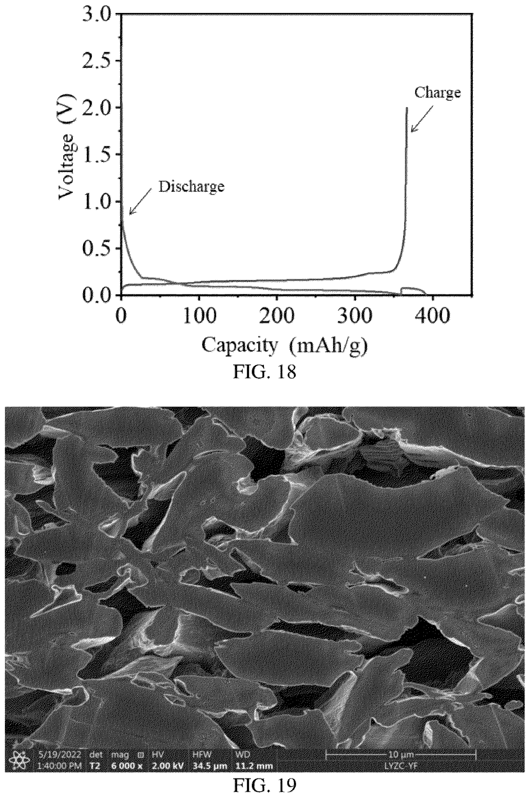

Charge-discharge curves of a cell prepared with the catalytic graphite material in this example are shown in FIG. 18.

### Example 8

This example provides a catalytic graphite material, and except that the catalytic graphite material was adaptively changed because the vacuum impregnation in step (1) was replaced with mechanical stirring in the preparation method, the catalytic graphite material was the same as that of Example 1;
specifically, the mechanical stirring comprises the following steps: the carbon powder and the catalyst solution were stirred at a stirring rate of 60 rpm for 1 h, then subjected to pressure filtration to obtain a material A containing the catalyst solution, and it was shown by the weighing result that a mass of the material A was 2.6 times a mass of the carbon powder, i.e., a mass ratio of the carbon powder to the catalyst solution was 1: 1.6.

### Example 9

This example provides a catalytic graphite material, and except that the catalytic graphite material was adaptively changed because the heat treatment in step (2) was performed at a temperature of 1100°C in the preparation method, the catalytic graphite material was the same as that of Example 1.

### Example 10

This example provides a catalytic graphite material, and except that the catalytic graphite material was adaptively changed because the heat treatment in step (2) was performed at a temperature of 2100°C in the preparation method, the catalytic graphite material was the same as that of Example 1.

### Example 11

This example provides a catalytic graphite material, and except that the catalytic graphite material was adaptively changed because the acid washing was not performed in step (2) in the preparation method, the catalytic graphite material was the same as that of Example 1.

### Example 12

This example provides a catalytic graphite material, and except that the catalytic graphite material was adaptively changed because the isostatic pressing treatment was not performed in step (2) in the preparation method, the catalytic graphite material was the same as that of Example 1.

### Example 13

This example provides a catalytic graphite material, and except that the catalytic graphite material was adaptively changed because the pressure was increased to 100 MPa in step (2) in the preparation method, the catalytic graphite material was the same as that of Example 1.

### Example 14

This example provides a catalytic graphite material, and except that the catalytic graphite material was adaptively changed because the pressure was increased to 500 MPa in step (2) in the preparation method, the catalytic graphite material was the same as that of Example 1.

### Example 15

This example provides a catalytic graphite material, and except that the catalytic graphite material was adaptively changed because pre-carbonization was not performed in step (1) in the preparation method, the catalytic graphite material was the same as that of Example 1.

### Comparative Example 1

This comparative example provides a carbon material, and except that the carbon material was adaptively changed because no nickel chloride was added in the preparation method, the carbon material was the same as that of Example 1.

### Comparative Example 2

This comparative example provides an artificial graphite material, and a preparation method for the artificial graphite material comprises the following steps:
(1) a coal-based needle green coke powder was pulverized to a coke powder with a particle size D50 of 10 µm; and
(2) the coke powder from step (1) was subjected to graphitization in a graphitization furnace at a graphitization temperature of 3000°C for a period of 10 h, and then cooled to room temperature to obtain the artificial graphite material.

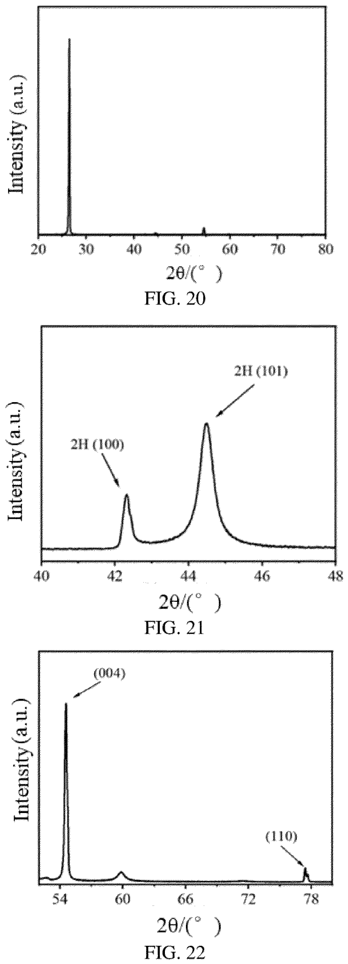

An SEM image of the cross section of the artificial graphite material in this comparative example is shown in FIG. 19, an XRD pattern in a 2θ range of 20-80° is shown in FIG. 20, an XRD pattern in a 2θ range of 40-48° is shown in FIG. 21, and an XRD pattern in a 2θ range of 52-80° is shown in FIG. 22.

### Comparative Example 3

This comparative example provides a flake natural graphite material, and a preparation method for the natural graphite material comprises the following steps:
(1) -195 flake natural graphite was purified with an acid mixture, and the acid mixture was prepared by mixing aqua regia with a 5 mol/L hydrofluoric acid solution in a mass ratio of 2: 1; and
(2) the flake natural graphite after acid washing was then washed with water, and dried at 300°C for 0.5 h to obtain the flake natural graphite material.

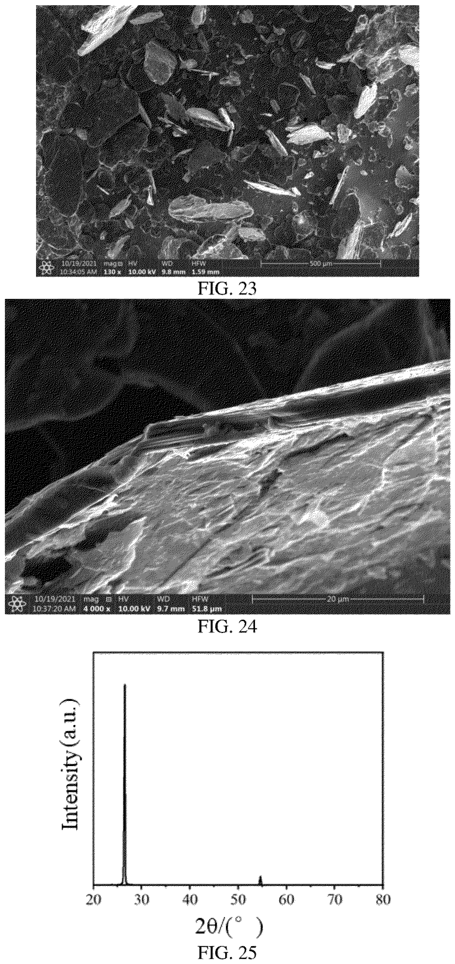

An SEM image of the flake graphite material at a scale of 500 µm is shown in FIG. 23, an SEM image at a scale of 20 µm is shown in FIG. 24, an XRD pattern in a range of 20-80° is shown in FIG. 25, an XRD pattern in a range of 40-48° is shown in FIG. 26, an XRD pattern in a range of 52-80° is shown in FIG. 27, and an XRD pattern in a 2θ range of 12-32° is shown in FIG. 28.

### Comparative Example 4

This comparative example provides a spheroidized natural graphite material, and a preparation method for the spheroidized natural graphite material comprises the following steps:
(1) -195 flake natural graphite obtained from flotation was pulverized to a Dv50 of 16 µm, and then spheroidized in a spheroidizing machine to obtain spheroidized natural graphite;
(2) the above spheroidized natural graphite was purified with an acid mixture, and the acid mixture was prepared by mixing aqua regia with a 5 mol/L hydrofluoric acid solution in a mass ratio of 2: 1; and
(3) the spheroidized natural graphite purified by acid washing was then washed with water, and dried at 300°C for 0.5 h to obtain the spheroidized natural graphite material.

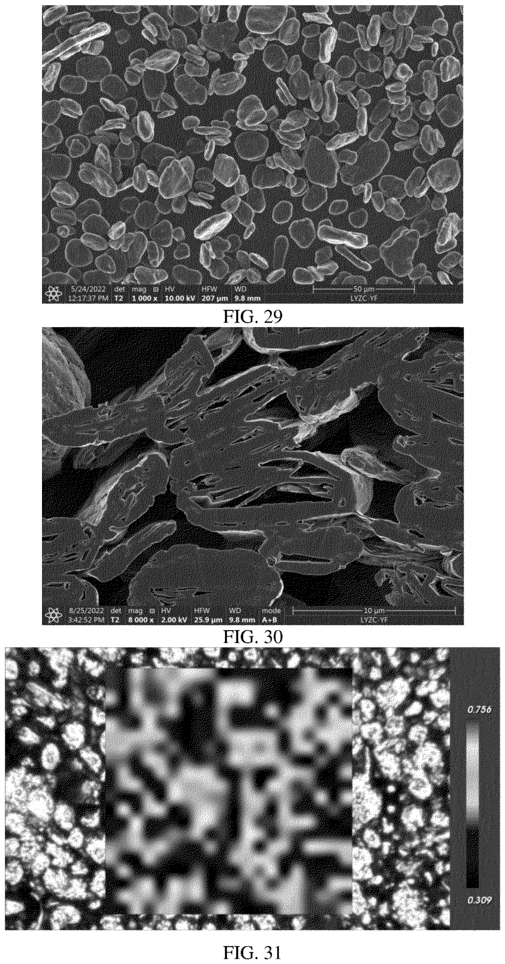

An SEM image of the spheroidized natural graphite material is shown in FIG. 29, an SEM image of the cross section is shown in FIG. 30, and a Raman 2D image and corresponding optical picture obtained from plane-scanning by a laser Raman spectroscopy are shown in FIG. 31.

The materials obtained from the above examples and comparative examples were tested. The test includes:
(1) the sample was subjected to XRD spectral scanning, wherein the X-ray diffractometer employed a copper target, a wavelength was 0.154056 nm, a scanning speed was about 4°/min, and the spectral information was obtained by analysis software such as HighScore Plus, jade, etc.; the orientation index of graphite was determined by a ratio of the peak intensities of the (004) peak near 54.5° to the (110) peak near 77.7°, and the orientation index of graphite was I₀₀₄/I₁₁₀;
(2) the morphology of the sample was observed by scanning electron microscopy;
(3) based on the premise of not damaging or burning the sample in the Raman detection, the sample was detected at a laser wavelength of 532 nm by laser Raman spectrometer, and the sample was scanned on selected area by Raman 2D imaging, i.e., Raman plane-scanning function, wherein the selected area was actually made up of 400 single-point Raman spectra, R values of the 400 single-point Raman spectra were calculated via a built-in function of the instrument and generated a colored map of the R values of the selected area, the color column on the right side of the colored map indicated the R values represented by different colors in the colored map, and the average value and standard deviation of R values were calculated; the R = I_{D}/I_{G}, where I_{D} is the peak intensity of the D peak, I_{G} is the peak intensity of the G peak, the Raman peak of the D peak is at approximately 1350 cm⁻¹, and the Raman peak of the G peak is at approximately 1580 cm⁻¹;
(4) the sample was cut and polished by argon ion beam, and the sectional structure was observed by scanning electron microscope;
(5) the graphitization degree of the sample was determined according to the method described in GB/T 24533-2019;
(6) the initial Coulombic efficiency and initial delithiation/lithiation capacity of the sample were tested according to the test method as follows: the graphite anode material was prepared into a slurry according to a mass ratio of graphite anode material: CMC: SP: SBR = 93.5: 1.5: 2: 3, coated, dried and roller-pressed to obtain a anode plate, and then the anode plate was employed in conjunction with a counter electrode of lithium metal plate to prepare a CR2430 button half-cell; the initial lithiation capacity and delithiation capacity and the initial Coulombic efficiency of the graphite anode material were tested: the button half-cell was discharged to 0.005 V at 0.1C and left to stand for 10 min, discharged to 0.005 V at 0.01C and left to stand for 10 min, and then charged to 2 V at 0.1C to complete the test, so as to obtain the initial lithiation capacity and delithiation capacity, and the ratio of the initial delithiation capacity and lithiation capacity was the initial Coulombic efficiency;
(7) the specific surface area of the sample was determined according to GB/T 19587;
(8) the true density of the sample was determined according to the method described in GB/T 24533-2019; and
(9) the ash content of the sample was determined according to the method described in YS/T 63.19-2012.

The I₀₀₄/I₁₁₀, graphitization degree, R value, initial delithiation capacity, initial Coulombic efficiency, BET, true density and ash content obtained from the tests are shown in the table below.

**Table 1**

| | Having a3R phase | I₀₀₄/I₁₁₀ | Graphi tization degree (%) | R value (I_{D}/I_{G}) | Initial delithiati on capacity (mAh/g) | Initial Coulo mbic efficie ncy (%) | BET (m²/g) | True density (g/cm³) | Ash content (%) |
|---|---|---|---|---|---|---|---|---|---|
| Examp le 1 | Yes | 1.77 | 96.8 | 0.121 ± 0.053 | 365.3 | 91.5 | 2.8 | 2.26 | 0.03 |
| Examp le 2 | Yes | 2.32 | 96.4 | 0.136 ± 0.084 | 360.4 | 91.3 | 3.1 | 2.25 | 0.05 |
| Examp le 3 | Yes | 2.62 | 95.1 | 0.183 ± 0.082 | 352.1 | 87.7 | 5.5 | 2.23 | 0.05 |
| Examp le 4 | Yes | 2.55 | 95.8 | 0.162 ± 0.076 | 354.1 | 88.1 | 5.2 | 2.25 | 0.07 |
| Examp le 5 | Yes | 2.51 | 95.4 | 0.156 ± 0.083 | 354.4 | 88.3 | 5.1 | 2.24 | 0.04 |
| Examp le 6 | Yes | 2.28 | 96.6 | 0.125 ± 0.062 | 362.1 | 92.2 | 3.3 | 2.26 | 0.04 |
| Examp le 7 | Yes | 1.65 | 97.5 | 0.105 ± 0.033 | 367.3 | 94.1 | 2.1 | 2.27 | 0.03 |
| Examp le 8 | Yes | 2.79 | 95.6 | 0.232 ± 0.087 | 345.3 | 82.3 | 8.5 | 2.18 | 0.04 |
| Examp le 9 | Yes | 2.91 | 92.5 | 0.263 ± 0.102 | 340.5 | 78.7 | 9.7 | 2.04 | 0.06 |
| Examp le 10 | Yes | 3.02 | 96.2 | 0.243 ± 0.107 | 358.2 | 84.1 | 23.3 | 2.26 | 0.04 |
| Examp le 11 | Yes | 2.45 | 96.7 | 0.126 ± 0.075 | 158.6 | 91.5 | 3.1 | 3.93 | 56.3 |
| Examp le 12 | Yes | 3.11 | 95.1 | 0.253 ± 0.097 | 341.3 | 81.3 | 9.5 | 2.17 | 0.04 |
| Examp le 13 | Yes | 3.45 | 95.6 | 0.266 ± 0.088 | 350.6 | 85.8 | 10.3 | 2.24 | 0.03 |
| Examp le 14 | Yes | 3.21 | 96.3 | 0.207 ± 0.089 | 353.2 | 85.6 | 12.2 | 2.25 | 0.04 |
| Examp le 15 | Yes | 3.05 | 95.2 | 0.231 ± 0.112 | 343.2 | 81.9 | 13.7 | 2.19 | 0.06 |
| Compa rative Examp le 1 | No | / | / | 0.756 ± 0.273 | 231.5 | 75.2 | 12.1 | 1.98 | 0.04 |
| Compa rative Examp le 2 | No | 9.48 | 94.3 | 0.131 ± 0.047 | 355.6 | 93.5 | 2.4 | 2.26 | 0.01 |
| Compa rative Examp le 3 | Yes | 139.5 | 98.2 | 0.101 ± 0.043 | 368.3 | 86.1 | 5.1 | 2.27 | 0.32 |
| Compa rative Examp le 4 | Yes | 3.66 | 96.5 | 0.505 ± 0.139 | 367.7 | 84.2 | 6.5 | 2.27 | 0.22 |

As can be seen from Table 1 and the drawings:
(1) FIG. 1 shows the characteristic structure and natural pore channels of biochar, FIG. 2 shows that the catalyst is uniformly dispersed on the surface and in the pore channels of biochar, and FIG. 5 shows that the catalyst is uniformly dispersed in the internal voids of biochar; as shown in FIGS. 6-8, there obviously exists the 3R phase at approximately 43.3° and 46.1°, and the orientation index is 1.77 based on the ratio of the peak intensities of (004) and (110); graphite sheets of the sample are found to have a small orientation index by the test because of the graphite spheres, small-particle aggregates and irregular graphite particles existing in the catalytic graphite; as shown in FIG. 9, the distribution of R values shows that the overall R value is small, the graphite conversion rate is high, and the structure is uniform; as shown in FIGS. 10-13, some of the particles have a flake morphology similar to that of flake natural graphite, and there are also spherical graphite particles, and additionally, there are also aggregates formed by small particles and other irregular particles; it is proved by FIG. 14 that the core of hollow spherical graphite particles is non-solid; it can be seen from FIG. 15 that the graphite spheres have a hollow structure, and in addition, the catalytic graphite has a pore structure inside formed by different orientations and bending and dislocation behaviors of the graphite sheets; it can be seen from FIG. 19 that the particles of the artificial graphite material are dense inside; it can be seen from FIGS. 20-22 that no 3R phase exists at approximately 43.3° and 46.1° for the artificial graphite material, and the orientation index is 9.48 based on the ratio of the peak intensities of (004) and (110); it can be seen from FIGS. 25-27 that the flake graphite material has the 3R phase at approximately 43.3° and 46.1°, and the orientation index is 139.5 based on the ratio of the peak intensities of (004) and (110); as shown in FIG. 28, the flake graphite has obviously higher intensity than the catalytic graphite material at the (002) peak near 26.4°; as shown in FIG. 31, the overall R value is large shown by the R value distribution in this figure, which is significantly greater than that of the measured result of the catalytic graphite material.
(2) The catalytic graphite material in the present application has the 3R phase, and the existence of the 3R phase provides more intercalation sites for lithium ions; as can be seen from Examples 1-7, an increase in the proportion of the catalyst and an increase in the heat treatment temperature are conducive to the improvement of the capacity, the initial efficiency, and the graphitization degree of the catalytic graphite material; as can be seen from the SEM morphology image of the carbon powder in Example 1, the biochar has obvious natural pore channels and pore structure, which is beneficial for the uniform dispersion of the catalyst; moreover, the catalytic graphite material of the present application has a low degree of orientation, such that the expansion caused by the charging and discharging process is tending to be isotropic, thus exhibiting low expansion characteristics; as can be seen from Example 1 and Example 8, the vacuum impregnation process is conducive to impregnating the pores of the carbon material with the catalyst solution, thereby facilitating the conversion from the carbon material to the catalytic graphite with high efficiency and high quality.
(3) As can be seen from Example 1 and Examples 9-10, with an overly low heat treatment temperature, the catalyst cannot well convert the carbon material into catalytic graphite, which results in the catalytic graphite anode material having a lower true density, a higher specific surface area, a lower capacity and a lower initial efficiency, and with an overly high heat treatment temperature, the performance of the material is also affected; as can be seen from Example 1 and Example 11, without acid washing, the presence of impurities leads to a high ash content, a high true density, and a low capacity; as can be seen from Example 1 and Examples 12-14, the isostatic pressing treatment and the pressure of the isostatic pressing treatment have an effect on the performance of the material, the use of a suitable pressure range in the isostatic pressing treatment can coat the carbon powder tightly on part of the catalyst, and accordingly, the carbon coated on the catalyst surface is converted into graphite in the catalytic conversion process, and graphite hollow spheres can be obtained after removing the catalyst by acid washing; as can be seen from Example 1 and Example 15, if pre-carbonization is not performed, the carbon material will contract largely in the catalytic heat treatment process, and there will be a lot of volatile components, resulting in a poor catalytic result, which specifically includes an increased surface area, a reduced capacity and a reduced initial efficiency; moreover, the space utilization of the heat treatment equipment will be very limited, which results in a reduced production efficiency and increased comprehensive energy consumption.
(4) As can be seen from Example 1 and Comparative Example 1, without the catalyst, the conversion of graphite cannot be realized under high-temperature carbonization conditions, and the composite anode material has low capacity and low initial efficiency, which indicate that the catalyst is a necessary condition for the conversion from the carbon material to the graphite material; as can be seen from Example 1 and Comparative Example 2, the catalytic graphite has the 3R phase (rhombohedral phase), while the artificial graphite does not have the 3R phase (rhombohedral phase); the sectional structure of catalytic graphite material has a pore structure formed by different orientations and bending and dislocation behaviors of the graphite sheets and has hollow graphite spheres, while the sectional structure of artificial graphite is dense; moreover, the graphitization degree of catalytic graphite is higher than that of artificial graphite; as can be seen from Example 1 and Comparative Example 3, because the natural graphite has high degree of crystallinity, more obvious layered structure and small layer spacing, the intensity of (002) peak of natural graphite near 26.4° is significantly higher than that of (002) peak of catalytic graphite near 26.4° in the XRD pattern; besides, the flake natural graphite in Comparative Example 3 mainly includes flake graphite particles, and aside from particles having the flake morphology similar to the natural graphite, the catalytic graphite also includes hollow spherical graphite particles, small-particle aggregates and irregular graphite particles; as a result, the orientation index of the catalytic graphite material is significantly smaller than that of the flake natural graphite material; as can be seen from Example 1 and Comparative Example 4, the sectional surface of the spherical natural graphite has a pore structure but does not have hollow graphite spheres, while the catalytic graphite material has graphite particles with a hollow spherical structure, and the average value of R values obtained from the Raman plane-scanning of the catalytic graphite is smaller than the average value of R values obtained from the Raman plane-scanning of the spherical natural graphite.

In summary, the present application provides a catalytic graphite material, a preparation method therefor and use thereof, wherein the catalytic graphite material has a high purity and a high graphitization degree, and the catalytic graphite material has a 3R phase, which exhibits the advantages of high capacity, high initial efficiency and low expansion when applied to anode materials for lithium-ion batteries and thereby significantly improves lithium-ion batteries in the electrochemical performance such as capacity and initial efficiency.

Although the specific embodiments of the present application are described above, the protection scope of the present application is not limited thereto. It should be clear that any changes or substitutions which are obvious to those skilled in the art in the technical scope disclosed in the present application shall fall within the protection and disclosure scope of the present application.

## Claims

1. A catalytic graphite material, comprising flake graphite and hollow spherical graphite particles, wherein the catalytic graphite material has a 3R phase.

2. The catalytic graphite material according to claim 1, wherein the catalytic graphite material further comprises particle aggregates and irregular particles;
the catalytic graphite material has a graphitization degree indicated as g, wherein 95% ≤ g < 100%;
the catalytic graphite material has an R value of 0.03-0.4, wherein the R value = I_{D}/I_{G};
the hollow spherical graphite particles have an outer diameter indicated as D, wherein 5 < D < 50 µm.

3. A preparation method for the catalytic graphite material according to claim 1 or 2, comprising the following steps:
(1) pre-carbonizing a carbon source to obtain a carbon powder, mixing the carbon powder with a catalyst solution, and performing solid-liquid separation to obtain composite particles loaded with a catalyst;
(2) subjecting the composite particles in step (1) to heat treatment and performing post-treatment to obtain the catalytic graphite material.

4. The preparation method according to claim 3, wherein the mixing of the carbon powder with the catalyst solution in step (1) comprises subjecting the carbon powder to vacuum impregnation with the catalyst solution;
the vacuum impregnation is performed for a period of 1-2.5 h;
a mass ratio of the carbon powder to the catalyst solution in step (1) is 1: (4-7);
a mass of a material A obtained from the solid-liquid separation in step (1) is 3-3.7 times a mass of the carbon powder.

5. The preparation method according to claim 3 or 4, wherein the pre-carbonizing in step (1) is performed at a temperature of 500-1200°C for a period of 1-6 h;
the pre-carbonizing in step (1) is performed under a protective gas, and the protective gas comprises any one or a combination of at least two of nitrogen, argon, krypton or helium;
the carbon powder in step (1) has a particle size D50 of 5-45 µm;
the solid-liquid separation in step (1) comprises pressure filtration;
the solid-liquid separation in step (1) is further followed by drying, and the drying is performed at a temperature of 150-300°C for a period of 2-4 h.

6. The preparation method according to any one of claims 3-5, wherein the catalyst in step (1) comprises an inorganic salt and/or an organic salt, and is any one or a combination of at least two of inorganic salts and/or organic salts of vanadium, chromium, manganese, iron, cobalt, nickel or copper;
the carbon source in step (1) comprises a biomass carbon source and/or a biomass-derived material;
the biomass carbon source comprises any one or a combination of at least two of straw, shell, wood or bamboo;
the biomass-derived material comprises any one or a combination of at least two of glucose, sucrose, starch, lignin, cellulose or hemicellulose.

7. The preparation method according to any one of claims 3-6, wherein the composite particles are further subjected to isostatic pressing treatment before the heat treatment in step (2);
the isostatic pressing treatment has a pressurization rate of 5-100 MPa/min and a pressure of 200-400 MPa;
the isostatic pressing treatment has a pressure holding period of 10-120 min and a depressurization rate of 5-100 MPa/min;
the isostatic pressing treatment is performed for at least two times;
the heat treatment in step (2) is performed at a temperature of 1300-1900°C for a period of 1-5 h.

8. The preparation method according to any one of claims 3-7, wherein the post-treatment in step (2) comprises acid washing, water washing and drying in sequence;
an acid-washing solution employed in the acid washing comprises hydrochloric acid and/or hydrofluoric acid;
the drying is performed at a temperature of 150-300°C for a period of 0.5-3 h.

9. The preparation method according to any one of claims 3-8, wherein the preparation method comprises the following steps:
(1) pre-carbonizing a carbon source at a temperature of 500-1200°C for 1-6 h under a protective gas to obtain a carbon powder with a particle size D50 of 5-45 µm, subjecting the carbon powder to vacuum impregnation with a catalyst solution for 1-2.5 h, then performing pressure filtration, and drying a filter cake obtained from the pressure filtration at 150-300°C for 2-4 h, so as to obtain composite particles loaded with a catalyst;
a mass ratio of the carbon powder to the catalyst solution is 1: (4-7);
(2) pressurizing the composite particles in step (1) to 200-400 MPa at a pressurization rate of 5-100 MPa/min, performing isostatic pressing treatment for 10-120 min, then depressurizing at a depressurization rate of 5-100 MPa/min to obtain an isostatic-pressing material, and subjecting the isostatic-pressing material to heat treatment at a temperature of 1300-1900°C for 1-5 h, then performing acid washing, water washing and drying in sequence, so as to obtain the catalytic graphite material.

10. A lithium-ion battery, comprising the catalytic graphite material according to claim 1 or 2.
